# EUROPEAN PATENT SPECIFICATION

(11) **EP 0 639 448 B1**
(45) Date of publication and mention of the grant of the patent: **16.04.1997**
(21) Application number: 93306503.9
(22) Date of filing: 18.08.1993
(51) Int. Cl.: B30B 9/16, A23N 1/00

(54) **Juice extractor**
Saftpresse
Appareil pour extraire des jus

(43) Date of publication of application: 22.02.1995
(73) Proprietor: Kim, Jong Gill, Sucho-ku, Seoul (KR)
(72) Inventor: Kim, Jong Gill, Sucho-ku, Seoul (KR)
(74) Representative: Jennings, Nigel Robin

(56) References cited:
- DE-A- 4 204 133

## Description

The present invention relates to a juice extractor of the type referred to in the precharacterising portion of claim 1 and is concerned with the releasable connection between the main body and the housing.

Juice extractors of the type referred to above generally include an electric motor as the power source and the housing containing the squeezing rollers, which is connected to the main body, generally has a surface which engages a corresponding surface on the main body. Juice containing material, such as vegetables or fruit, is supplied to the housing, typically into a hopper which communicates with the interior of the housing, and is compressed and squeezed by the squeezing rollers and discharged from the extractor after separating the juice from the dregs, i.e. the solid material. In practice, a proportion of the dregs always remains within the housing which necessitates careful washing with water prior to the next time the juice extractor is used. For this purpose the main body and the housing are separable and the housing is detached from the main body.

Conventionally, the housing is detachably connected to the main body by means of a bolt-nut assembly or a clip assembly. U.S. Patent No.5,156,872 discloses a juice extractor of the type referred to above in which the two sections of the outer casing, i.e. the housing for the squeezing rollers and the main body, are detachably connected by means of a two-part clip. This clip is mechanically complex and not wholly reliable in the long term and its appearance is not aesthetically pleasing.

It is therefore the object of the present invention to provide a juice extractor of the type referred to above in which the main body and the housing are connected together by means which are both simple and reliable and which have no visual impact on the external appearance of the extractor.

According to the present invention, a juice extractor of the type referred to above is characterised by a gearbox including a first rotary shaft which is rotationally coupled to the output shaft and carries a first clutch gear which is selectively rotationally engageable with it, a second shaft which is rotationally coupled to the first shaft to rotate in the opposite direction and carries a second clutch gear which is selectively rotationally engageable with it, a connection gear which is in mesh with the two clutch gears and is connected to a member having a screw threaded portion which projects beyond the gearbox and is in screw threaded engagement with a screw threaded hole in the housing and clutching means cooperating with the clutch gears which is externally actuable between a first position, in which the first clutch gear is rotationally coupled to the first shaft and the second clutch gear is not coupled to the second shaft, a second position, in which the second clutch gear is rotationally coupled to the second shaft and the first clutch gear is not coupled to the first shaft, and a neutral position, in which neither clutch gear is rotationally coupled to the associated shaft. The member with the screw threaded portion is preferably in the form of a peg or shaft with an external thread which cooperates with an internal thread in a hole in the housing.

Thus when it is desired to connect the housing of a juice extractor in accordance with the present invention to the associated main body, the clutching means, e.g. a lever projecting beyond the casing of the gearbox, is moved into one of the two positions and the projecting screw threaded portion is placed into engagement with the screw threaded hole in the housing. The motor is then switched on and the screw threaded portion is rotated to screw it into the threaded hole thereby drawing the housing and the main body into close engagement with one another. The clutching means is then placed in the neutral position and operation of the motor will result in rotation of the two squeezing rollers with no rotation of the screw threaded portion. After squeezing of the fruit or vegetable material has been completed, the clutching means is placed in the other of the two positions and actuation of the motor then results in rotation of the screw threaded portion in the opposite direction whereby the screw threaded portion is unscrewed from the hole in the housing and the housing and the main body are separated to permit washing of the housing and the associated squeezing rollers and filtering sieve.

In order to ensure that the motor can reliably unscrew the screw threaded portion from the hole in the housing it is desirable that the torque applied to it when unscrewing it is greater than the torque that was applied to it when it was initially screwed in. For this reason, it is preferred that the first and second shafts are rotationally coupled by means of meshing gears and that one of the shafts rotates more slowly than the other shaft. Since electric motors conventionally rotate at relatively high speed, that is to say at a speed which is greater than that at which it is desirable the squeezing rollers should rotate, it is preferred that the end of the shaft which rotates more slowly has a non-circular portion which projects out of the gearbox and is received in a correspondingly shaped hole in one end of one of the squeezing rollers.

Further advantages and details of the invention will be apparent from the following description of one specific embodiment which is given with reference to the accompanying drawings, in which:
Figure 1 is an exploded perspective view of a juice extractor according to the present invention;

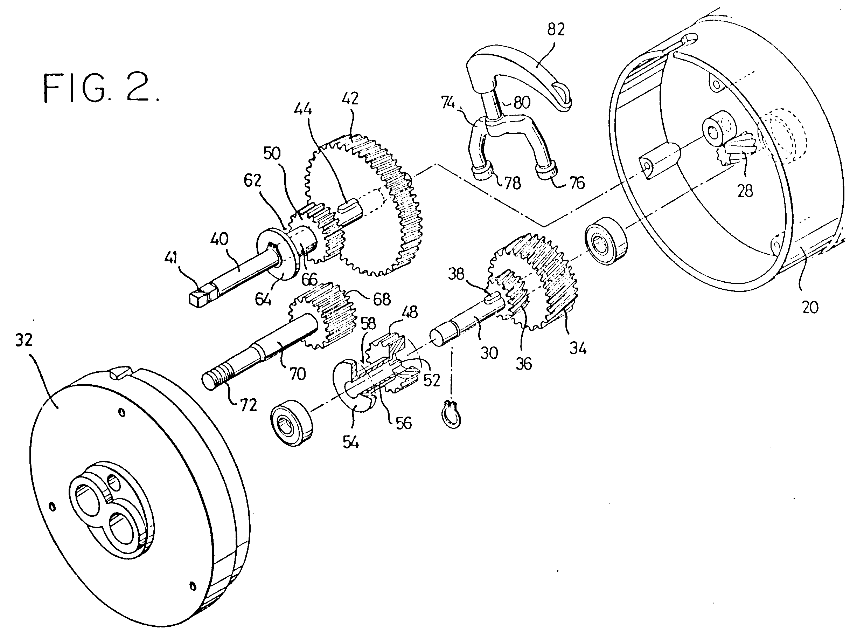

Figure 2 is an exploded perspective view of the gearbox constituting the detachable connecting apparatus of the extractor of Figure 1;

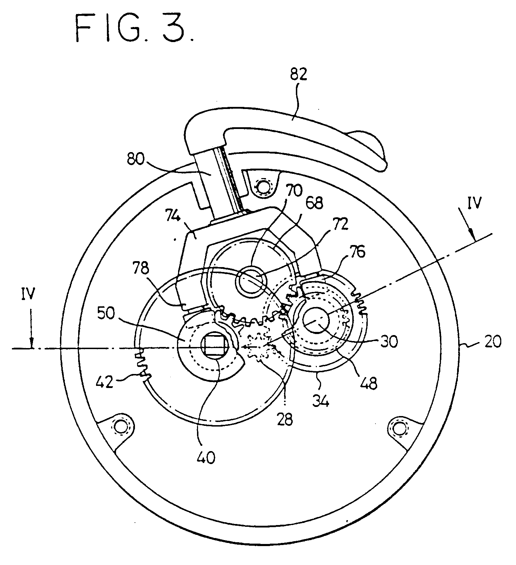

Figure 3 is a diagrammatic end view of the interior of the gearbox in the configuration in which the housing is being connecting to the main body;

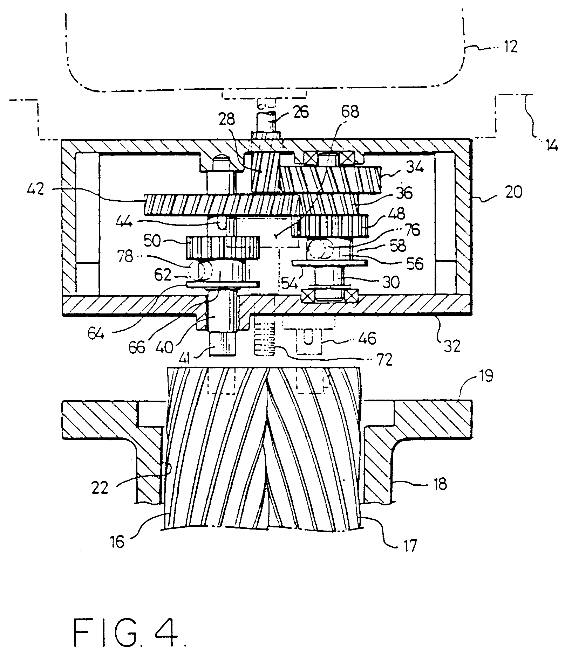

Figure 4 is a scrap sectional view on the line IV-IV of Figure 3;

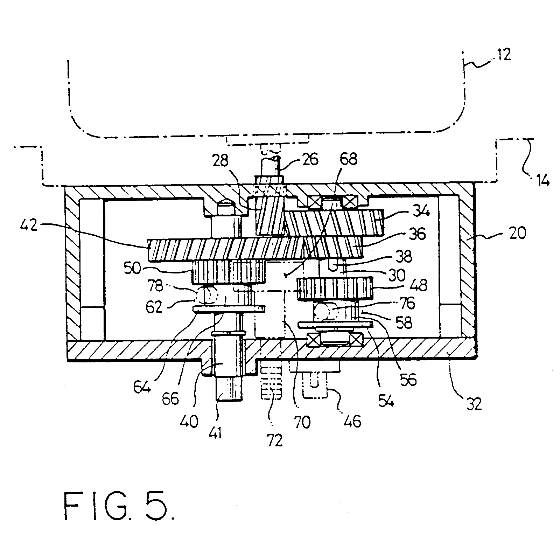

Figure 5 is a view similar to Figure 4, showing the configuration in which the housing is being separated from the main body.

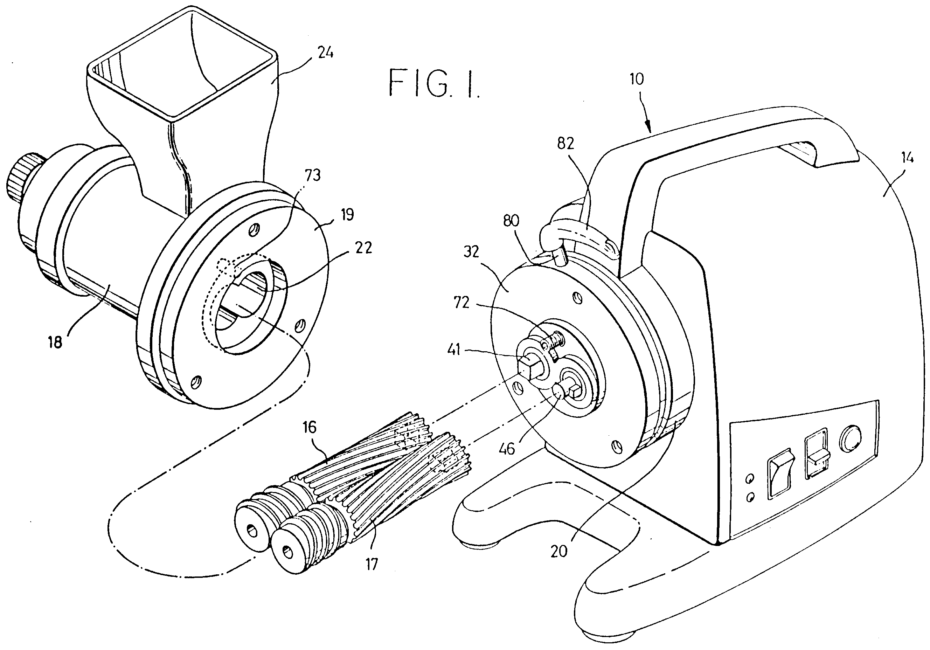

The juice extractor 10 shown in Figure 1 comprises a main body 14 containing a motor 12 and a housing 18 containing a pair of cooperating squeezing rollers 16,17. Connected to the front of the main 14 is a gearbox 20, which will be described in detail below. The housing 18 defines a cylinder 22 which accommodates the squeezing rollers 16,17 and communicates with a supply hopper 24 for the material from which juice is to be extracted, e.g. fruit or vegetable material.

The rotary output shaft 26 of the motor 12 extends into the gearbox 20 and at its free end there is a helical gear 28 of small diameter. Rotationally supported adjacent to it is a first shaft 30. One end of the first shaft 30 is supported at the rear surface of the gearbox 20 and its other end is supported at a front cover plate 32 of the gearbox 20. Carried on the first shaft 30 are a first helical gear 34 of large diameter in mesh with the helical gear 28 and a second helical gear 36 of smaller diameter than the first helical gear 34. Integrally formed on the shaft 30 in front of the second helical gear 36 is a key 38.

Also provided adjacent the helical gear 28 but on the side opposite to the shaft 30 is a second shaft 40. One end of the second shaft 40 is supported at the rear surface of the gearbox 20 and its other end passes through the front cover plate 32 and is provided with a non-circular end portion 41, in this case of rectangular shape, which is received in a correspondingly shaped hole in the squeezing roller 16. The second shaft 40 carries a third helical gear 42 of large diameter which is in engagement with the second helical gear 36 on the first shaft 30 and in front of which a key 44 is formed.

Thus, the first shaft 30 carrying the first and second helical gears 34,36 and the second shaft carrying the third helical gear 42 constitute reduction or step-down gearing through which torque is transmitted from the motor to the squeezing roller 16 through the rectangular end 41 of the second shaft 40. Thus, torque is transmitted, in turn, through the first helical gear 34, the second helical gear 36 and the third helical gear 42 and the speed of rotation of the first shaft 30 is greater than that of the second shaft 40.

The other squeezing roller 17 is rotationally supported at one end by a supporting rod or axle 46 connected to and projecting externally from the front cover plate 32.

A first clutch gear 48 and a second clutch gear 50 are carried by the first shaft 30 and the second shaft 40, respectively. Provided in the internal bore of the first clutch gear 48 is a key 52 which cooperates with the key 38 on the first shaft 30 to connect the gear 48 to the shaft 30. Connected to the front surface of the gear 48 is a sleeve 56 having a flange 54 at its front end. Accordingly, an annular groove 58 is formed between the flange 54 and the front surface of the clutch gear 48.

Similarly to the first clutch gear 48, the second clutch gear 50 has an internal key engaging the key 44 on the second shaft 40 and a sleeve 66 connected to a flange 64 forming an annular groove 62.

The first and second clutch gears 48,50 are movable in the axial direction on the first and second shafts 30,40, respectively, parallel to the axis of the associated shaft 30,40 between the second and third helical gears 36,42, and the front cover plate 32.

Thus, for example, as the first clutch gear 48 approaches the second helical gear 36 on the first shaft 30, the key 38 on the shaft 30 engages the key 52 of the clutch gear 48, and thus the first shaft 30 and the first clutch gear 48 are mechanically rotationally connected together, whereby the clutch gear 48 rotates with the shaft 30. If the clutch gear 48 is moved towards the front cover plate 32, the key 38 on the shaft 30 disengages from the key 52 of the clutch gear 48. The second clutch gear 50 may be similarly engaged with and disengaged from the second shaft 40 by movement towards and away from the third helical gear 42.

A connection gear 68 is in mesh with the first and second clutch gears 48,50 on the first and second shafts 30,40, respectively. The connection gear 68 is integrally connected to a stud 70 which extends towards the front of the main body 14 and passes through the front cover plate 32 and has a threaded portion 72 formed at its end. This threaded portion 72 is in threaded engagement with a threaded hole 73 formed in the connection surface of the housing 18 above the cylinder 22.

A clutching fork 74 is provided for mechanically engaging either the first or the second clutch gear 48,50 with the first and second shafts 30,40, respectively. The clutching fork 74 comprises two branches 76,78, which are received in a respective one of the annular grooves 58,62 of the first and second clutch gears 48,50, and an actuating rod 80 which extends through the top of the gear box 20 and is connected to the upper ends of the branches 76,78. Connected to the upper end of the actuating rod 80 is a laterally extending actuating lever 82. The lever 82 is movable in rotation between a first position in which the first clutch gear 48 engages the first shaft 30 and the second clutch gear 50 is disengaged from the second shaft 40, a second position, in which the second clutch gear 50 is connected to the second shaft 40 and the first clutch gear 48 is disengaged from the first shaft 30, and a neutral position in which both clutch gears are disengaged.

When the clutching fork is actuated to engage the first clutch gear 48 with the first shaft 30, torque is transmitted from the first shaft 30 to the connection gear 68 through the first clutch gear 48. The threaded portion 72 therefore rotates and is screwed into the hole 73 thereby drawing the flange connecting face 19 of the housing 18 into close engagement with the front of the main body 14, i.e. the front cover plate 32, and thus connecting the housing 18 to the main body 14. When the connection of the housing 18 to the main body 14 is completed, the clutching fork 74 is moved into the neutral position.

When the clutching fork 74 is in the neutral position, the keys 52 and 60 of the first and second clutch gears 48 and 50 do not cooperate with the keys 38 and 44 on the first and second shafts 30,40 with the result that no torque is transmitted to the clutch gears 48,50 and the connection gear 68 remains stationary whereby the connection of the threaded hole 73 in the housing 18 with the threaded portion 72 of the connection gear 68 remains in being. The power of the motor 12 is now transmitted to the squeezing rollers 16,17 through the first and second shafts 30,40 thereby crushing or squeezing fruit or vegetable material within the space 22 and extracting juice from it.

In order to separate the housing 18 from the main body 14, the threaded portion 72 of the connection gear 68 should be rotated in the reverse direction in the threaded hole 73 in the housing 18, and the torque applied to it should be greater than that which was applied when screwing the threaded portion 72 into the hole 73. For this purpose, the second clutch gear 50 on the second shaft 40, which rotates at lower speed than the first shaft 30, is connected to the shaft 40 by appropriately actuating the clutching fork 74. The motor torque is then transmitted through the gears 34,36,42 and 50 to the gear 68 and threaded portion 72 is rotated slowly in the reverse connection and unscrewed from the hole 73 thereby permitting separation of the housing 18 from the main body 14.

## Claims

1. A juice extractor for extracting juice from fruit or vegetable material including a main body (14) which contains a motor (12) and a housing (18) which contains two cooperating rotatable squeezing rollers (16,17), one of which is coupled to the output shaft (26) of the motor (12), the main body (14) and the housing (18) being releasably connected together characterised by a gearbox (20) including a first rotary shaft (30) which is rotationally coupled to the output shaft (26) and carries a first clutch gear (48) which is selectively rotationally engageable with it, a second shaft (40) which is rotationally coupled to the first shaft (30) to rotate in the opposite direction and carries a second clutch gear (50) which is selectively rotationally engageable with it, a connection gear (68) which is in mesh with the two clutch gears (48,50) and is connected to a member (70) having a screw threaded hole (72) which projects beyond the gearbox (20) and is in screw threaded engagement with a screw threaded hole (73) on the housing (18) and clutching means (74) cooperating with the clutch gears (48,50) which is externally actuable between a first position, in which the first clutch gear (48) is rotationally coupled to the first shaft (30) and the second clutch gear (50) is not coupled to the second shaft (40), a second position, in which the second clutch gear (50) is rotationally coupled to the second shaft (40) and the first clutch gear (48) is not coupled to the first shaft (30), and a neutral position, in which neither clutch gear (48,50) is rotationally coupled to the associated shaft (30,40).

2. A juice extractor as claimed in claim 1, characterised in that the first and second shafts (30,40) are rotationally coupled by means of meshing gears (3,6,4,2) that one of the shafts (40) rotates more slowly than the other shaft (30).

3. A juice extractor as claimed in claim 2, characterised in that the end of the shaft (40) which rotates more slowly has a non-circular portion (41) which projects out of the gearbox (20) and is received in a correspondingly shaped hole in one end of one (16) of one of the squeezing rollers.

## Patentansprüche

1. Entsafter zum Extrahieren von Saft aus Früchten oder vegetabilem Material, umfassend einen Hauptkörper (14), der einen Motor (12) enthält, und ein Gehäuse (18), das zwei zusammenwirkende, drehbare Quetschwalzen (16, 17) enthält, von denen eine mit der Ausgangswelle (26) des Motors (12) gekuppelt ist, wobei der Hauptkörper (14) und das Gehäuse (18) lösbar miteinander verbunden sind, gekennzeichnet durch ein Getriebegehäuse (20), das eine erste Welle (30) umfaßt, die mit der Ausgangswelle (26) drehbar gekuppelt ist und ein erstes Kupplungsrad (48) trägt, das wahlweise mit der ersten Welle (30) im Drehsinn kuppelbar ist, eine zweite Welle (40), die mit der ersten Welle (30) drehbar gekuppelt ist, um sich in der entgegengesetzten Richtung zu drehen, und die ein zweites Kupplungsrad (50) trägt, das wahlweise mit der zweiten Welle (40) drehbar kuppelbar ist, ein Verbindungsrad (68), das mit den beiden Kupplungsrädern (48, 50) kämmt und mit einem Teil (70) verbunden ist, das einen Schraubgewindeabschnitt (72) aufweist, der über das Getriebegehäuse (20) hinaus vorragt und in Schraubverbindung mit einem Schraubgewindeloch (73) an dem Gehäuse (18) steht, und eine mit den Kupplungsrädern (48, 50) zusammenwirkende Kupplungsvorrichtung (74), die von außen zwischen einer ersten Stellung, in der das erste Kupplungsrad (48) mit der ersten Welle (30) im Drehsinn gekuppelt ist und das zweite Kupplungsrad (50) nicht mit der zweiten Welle (40) gekuppelt ist, einer zweiten Stellung, in der das zweite Kupplungsrad (50) mit der zweiten Welle (40) im Drehsinn gekuppelt ist und das erste Kupplungsrad (48) nicht mit der ersten Welle (30) gekuppelt ist, sowie einer neutralen Stellung betätigbar ist, in der kein Kupplungsrad (48, 50) mit der zugehörigen Welle (30, 40) drehbar gekuppelt ist.

2. Entsafter nach Anspruch 1, dadurch gekennzeichnet, daß die ersten und zweiten Wellen (30, 40) mittels kämmender Zahnräder (36, 42) im Drehsinn gekuppelt sind, wobei die eine (40) der Wellen langsamer als die andere Welle (30) drehbar ist.

3. Entsafter nach Anspruch 2, dadurch gekennzeichnet, daß das Ende der Welle (40), die sich langsamer dreht, einen unrunden Anschnitt (41) aufweist, der aus dem Getriebegehäuse (20) vorsteht und in einem entsprechend geformten Loch in einem Ende einer (16) der Quetschrollen aufgenommen wird.

## Revendications

1. Appareil destiné à extraire le jus de fruits ou de légumes comprenant un corps principal (14) qui contient un moteur (12) et un boitier (18) qui contient deux rouleaux presseurs rotatifs coopérants (16, 17), dont l'un est accouplé à l'arbre de sortie (26) du moteur (12), le corps principal (14) et le boitier (18) étant assemblés l'un à l'autre de manière détachable, caractérisé par une boite d'engrenages (20) comprenant un premier arbre rotatif (30) qui est accouplé en rotation à l'arbre de sortie (26) et porte un premier pignon d'embrayage (48) qui peut être amené sélectivement en prise de rotation avec cet arbre, un second arbre (40) qui est accouplé à rotation au premier arbre (30) afin de tourner dans le sens inverse et porte un second pignon d'embrayage (50) qui peut être amené sélectivement en prise de rotation avec cet arbre, un pignon de liaison (68) qui est en prise avec les deux pignons d'embrayage (48, 50) et est relié à un organe (70) présentant une partie filetée (72) qui fait saillie hors de la boîte d'engrenages (20) et est vissée dans une forure taraudée (73) dans le boitier (18) et un moyen de commande d'embrayage (74) coopérant avec les pignons d'embrayage (48, 50), qui peut être actionné de l'extérieur entre une première position dans laquelle le premier pignon d'embrayage (48) est accouplé à rotation au premier arbre (30) et le second pignon d'embrayage (50) n'est pas accouplé au second arbre (40), une deuxième position dans laquelle le second pignon d'embrayage (50) est accouplé à rotation au second arbre (40) et le premier pignon d'embrayage (48) n'est pas accouplé au premier arbre (30) et un point mort dans lequel aucun des deux pignons d'embrayage (48, 50) n'est accouplé à rotation à l'arbre associé (30, 40).

2. Appareil suivant la revendication 1, caractérisé en ce que les premier et second arbres (30, 40) sont accouplés à rotation au moyen de roues d'engrenage (36, 42) de telle sorte que l'un des arbres (40) tourne plus lentement que l'autre arbre (30).

3. Appareil suivant la revendication 2, caractérisé en ce que l'extrémité de l'arbre (40) qui tourne plus lentement présente une partie non circulaire (41) qui fait saillie hors de la boite d'engrenages (20) et est reçue dans un logement de forme correspondante pratiqué dans une extrémité de l'un (16) des rouleaux presseurs.
